# EUROPÄISCHE PATENTSCHRIFT

(11) **EP 1 433 885 B1**
(45) Veröffentlichungstag und Bekanntmachung des Hinweises auf die Patenterteilung: **28.02.2007**
(21) Anmeldenummer: 03027027.6
(22) Anmeldetag: 24.11.2003
(51) Int. Cl.: D04B 21/20, C09J 7/02

(54) **Auf sich selbst wickelbares Klebeband**
Self-winding adhesive tape
Ruban adhésif enroulable sur lui-même

(30) Priorität: 23.12.2002 DE 20220103 U
(43) Veröffentlichungstag der Anmeldung: 30.06.2004
(73) Patentinhaber: Coroplast Fritz Müller GmbH & Co. K.G., 42279 Wuppertal (DE)
(72) Erfinder: Ommerbom, Dagmar, 42119 Wuppertal (DE)
(74) Vertreter: Patentanwälte Dr. Solf & Zapf

(56) Entgegenhaltungen:
- EP-A- 0 466 342
- EP-A- 0 708 163
- WO-A-01/83632
- DE-A- 10 009 851
- DE-A- 10 102 927
- DE-U- 29 521 713
- DE-U- 29 900 924
- FR-A- 2 709 414
- PATENT ABSTRACTS OF JAPAN Bd. 2000, Nr. 14, 5. März 2001 (2001-03-05) & JP 2000 314062 A (AOYAMA SANGYO KK), 14. November 2000 (2000-11-14)

## Beschreibung

Die vorliegende Erfindung betrifft ein auf sich selbst wickelbares Klebeband mit einem aus einem Gewirk bestehenden bandförmigen Träger, der auf einer Seite mit einer druckempfindlichen Klebebeschichtung versehen ist, die unmittelbar auf den Träger aufgebracht ist.

In dem deutschen Gebrauchsmuster DE 299 00 924 U1 ist ein ähnliches Velours-Klebeband beschrieben, das zur Befestigung an einem komplementären Klettverschlußteil, insbesondere zum Bandagieren von langgestrecktem Gut, wie einem Kabelsatz für ein Automobil, dient und einen bandförmigen textilen Träger umfaßt, der auf seiner Oberseite klettfähige Schlaufen aufweist und auf dessen Unterseite eine Grundierungsschicht und auf der Grundierungsschicht eine selbstklebende Schicht aufgetragen ist. Die Grundierungsschicht weist ein spezifisches Flächengewicht von weniger als etwa 20 g/m² auf. Der Träger kann aus einem Kettengewirk bestehen. Für seine Materialdicke ist ein Bereich von etwa 0,8 bis 2,0 mm und für sein spezifisches Flächengewicht ein Bereich von etwa 120-220 g/m², insbesondere von etwa 140-180 g/m², offenbart. Das bekannte Klebeband stellt ein relativ festes Material dar, insofern der Träger in Längsrichtung eine Reißfestigkeit von etwa 100-200 N/cm aufweist.

Bei dem in der DE 101 02 927 A1 beschriebenen Klebeband der eingangs beschriebenen Art handelt es sich um ein Klebeband zum Ummanteln von beispielsweise Kabeln in Automobilen, Rohren oder dergleichen zumeist langgestreckten Objekten. Das Klebeband ist in seinem grundsätzlichen Aufbau ebenfalls mit einem Trägerband auf Veloursbasis und einer wenigstens bereichsweise auf das Trägerband aufgebrachten Klebebeschichtung ausgerüstet. Das Klebeband kann auf der Basis eines Gewirks hergestellt werden. Dadurch, daß das Trägerband eine Maschendichte im Bereich von etwa 25000 pro dm² bis 50000 pro dm² besitzt, läßt sich die Klebebeschichtung direkt auf das Trägerband aufbringen, d.h. im Gegensatz zur dem Klebeband gemäß DE 299 00 924 U1 ist keine Grundierungsschicht vorgesehen. Auch dieses bekannte Klebeband besteht aus einem relativ festen Material, da der Träger in Längsrichtung ebenfalls eine Reißfestigkeit von etwa 100-200 N/cm aufweist

Aus dem deutschen Gebrauchsmuster DE 295 21 713 U1 ist des Weiteren ein auf sich selbst wickelbares Klebeband mit einem aus einem sogenannten Malivlies bestehenden bandförmigen Träger bekannt, der auf einer Seite mit einer druckempfindlichen Klebebeschichtung versehen ist, die unmittelbar auf den Träger aufgebracht ist. Bei dem bekannten Träger handelt es sich dabei um einen Verbundwerkstoff, der auf dem Wege eines Durchwirkens mit den Vliesfasern als spezieller mechanischer Verfestigungsart hergestellt wird. Je höher dabei die Nahtdichte ist, desto größer wird der Anteil stehender, als Flor aufzufassender Fasern.

In der FR 2 709 414 A1 ist ein dehnbares und elastisches Gewebeklebeband mit einer Grammatur der Klebebeschichtung von 120 g/m² beschrieben. Außerdem wird eine grundsätzliche Anwendbarkeit der Lehre, eine flexible und dehnbare Ausführung des Trägers mit Wellenstruktur vorzusehen, auf andere Träger als Gewebe angedeutet. Welche Eigenschaften aus einem Gewirk gebildete Träger, insbesondere im Hinblick auf die Grammatur der Klebebeschichtung und die Feinheit der Fäden des Gewirks, haben könnten, bleibt offen.

Mit einem ähnlichen, mit einer zu erzielenden elastischen Dehnbarkeit verbundenen Problem wie das der FR 2 709 414 A1 beschäftigt sich auch die EP 0 708 163 A2. Das Dokument nennt dabei ein Klebeband mit "releasing paper", also nicht ein "auf sich selbst wickelbares Klebeband".

Die DE 100 09 851 A1 beschreibt ein Abdeckmaterial in Form von Blättern oder auf sich selbst aufgerollten Bändern für lackierte Oberflächen eines Kraftfahrzeug-Karosserie-Teils aus Kunststoffmaterial. Das Abdeckmaterial besteht aus einem mit einem selbstklebenden Haftmittel beschichteten biegsamen Träger aus einem UVbeständigen Material, wobei das Haftmittel ein Polyisobutylenkleber ist. Dieser Kleber hat eine spezielle Zusammensetzung und besteht aus einem Gemisch von Polyisobutylenen mit Molekulargewichten zwischen 5.000 und 100.000 ohne Zusatz von Acryl-, Methacryl- oder Styrolpolymeren, oder der Kleber ist ein Ethylen- Vinylacetat-Copolymerisat. Er reagiert nicht mit der lackierten Oberfläche, ist licht-, UV- und witterungsbeständig und kann, falls erforderlich, mittels eines Primers mit dem Träger verbunden sein. Das Abdeckmaterial ist im Zusammenwirken mit der abgedeckten Oberfläche luft- und wasserdampfdurchlässig, weist eine Dicke von mindestens 0,1 mm und eine Haftung an Stahl nach AFERA 4001 von mindestens 1 N/cm auf, verändert die abgedeckte lackierte Oberfläche des Kunststoffmaterials nicht und ist von dieser wieder leicht ablösbar. Der UV-beständige Träger ist ein zu seiner Vorder- und Rückseite hin luft- und wasserdampfdurchlässiges gewirktes oder ungewebtes Textilmaterial aus natürlichen oder synthetischen, organischen oder anorganischen Fasern oder eine perforierte Kunststoff-Folie oder ein perforiertes Papier aus Kunststoff-Fasern oder ein mindestens innen offenporiger Schaumstoff. Das Haftmittel verschließt die Poren des Trägers nicht vollständig. Unter dem "gewirkten oder ungewebten Textilmaterial" des "biegsamen Trägers" wird dabei "Vlies oder Filz" verstanden. Bei dem eingesetzten Vinylacetat-Copolymerisat-Kleber handelt es sich nicht um einen druckempfindlichen Kleber und bei dem Klebeband somit nicht um ein selbstklebendes Klebeband. Der Kleber muss durch Hitze reaktiviert werden, damit er klebt.

Textile Flächengebilde lassen sich grundsätzlich in Flach- oder Glattwaren (Gewebe, Vliese, glatte Gewirke) und Flor- oder Polwaren (Velours, Samt, Plüsch etc.) unterteilen. Bei dem aus den genannten Druckschriften genannten Trägermaterialien für die beschriebenen Klebebänder handelt es sich um Velours, die über einen Pol bzw. Faserflor verfügen. Sie werden daher auch als Polstoffe bezeichnet, die entsprechend der DIN 62055 als textile Flächengebilde mit ein- oder beidseitig aus einer Grundschicht herausragenden polschichtbildenden Fäden oder Fasern definiert sind. Eine Polschicht kann dabei ein- oder beidseitig angeordnet sein. Bei einem Velours handelt es sich insbesondere um einen einseitigen Polstoff mit offenen Pol, geringer bis mittlerer Polschichtdicke, wobei die Pollänge > 2 mm und 10 mm beträgt.

Die Verarbeitung von Klebebändern kann entweder mit der Hand oder über Wickelautomaten erfolgen. Bei der Verarbeitung von Hand ist in manchen Bereichen eine leichte Einreißbarkeit gewünscht, um das Verletzungsrisiko durch zu verwendende Messer oder Schneidwerkzeuge zu vermeiden. Außerdem lassen sich die Fertigungszeiten so reduzieren. Das Abreißen der Bänder erfolgt dabei quer zur Laufrichtung, wobei sich eine saubere, gerade Reißkante ergeben sollte. Ein Verjüngen des Materials beim Reißen ist ebenso unerwünscht, wie ausgefranste und faserige Reißkanten. Die vorstehend beschriebenen Klebebänder sind aufgrund ihrer hohen Festigkeit nicht handeinreißbar.

Für von Hand einreißbare textile Klebebänder werden zur Zeit folgende Träger eingesetzt: Zellwoll-Gewebe, Zellwoll-Gewebe mit Acrylatbeschichtung, Polyester-Gewebe, Polyester-Nähvliese, wasserstrahlverfestigte Vliese, Nadelvliese u.a..

Insbesondere Zellwoll-Gewebeklebebänder haben den Nachteil, daß sie aufgrund des Zellwoll-Gewebes teuer und verrottbar sind. Dies trifft auch auf Zellwoll-Gewebe mit Acrylatbeschichtung zu, wobei die Acrylatbeschichtetung des Trägers den Fertigungsaufwand noch erhöht. Die Polyester-Gewebeklebebänder weisen ebenfalls den Nachteil auf, daß sie aufgrund des eingesetzten Gewebes teuer sind, wobei der Preis den Herstellungsaufwand des Bandes einschließlich dessen des Trägermaterials widerspiegelt. In Abhängigkeit vom verwendeten Gamtyp lassen sich diese Bänder von Hand einreißen oder auch nicht.

Polyester-, insbesondere PET-Gewebeklebebänder, sind im wesentlichen durch eine hohe Reißfestigkeit gekennzeichnet. Es gibt vereinzelt Produkte, die sich von Hand einreißen lassen, allerdings besitzen diese Gewebe eine sehr offene und damit durchlässige Struktur. Diese Eigenschaft erschwert die Beschichtung mit Klebstoff sehr stark, insbesondere mit UV-vernetzbaren Acrylatklebstoffen, da solche Klebstoffe unvernetzt und mit hohem Fließvermögen auf das Gewebe aufgebracht werden.

PET-Nähvliese haben den Nachteil, daß sie eine relativ geringe Festigkeit besitzen. Werden Materialien mit höherer Festigkeit benötigt, muß das Flächengewicht erhöht werden, was sich negativ auf die Einreißbarkeit und den Preis auswirkt. Außerdem erhöht sich die Schichtdicke bei Erhöhung des Flächengewichtes erheblich, so daß diese Bänder nicht überall eingesetzt werden können.

Spinnvliese sind Faservliese aus Filamentfasern, die direkt aus der Spinnmasse in einem kontinuierlichen Prozeß hergestellt werden. Der Herstellungsprozeß setzt sich aus mehreren aneinander gereihten Teilprozessen zusammen. Diese umfassen ein Extrudieren und Schmelzen der Polymere, ein Spinnen der Fasern, das Verstrecken der Fasern, das Ablegen der Fasern auf einem Förderband und die Verfestigung des Vlieses. Letztere kann auf mechanischem (Vernadeln), thermischem (Kalander), sowie chemischem Wege (Bindemittel) erfolgen. Träger auf Spinnvliesbasis lassen sich in der Regel nicht oder nur schwer von Hand einreißen und weisen trotzdem nur geringe Festigkeiten auf. Außerdem verjüngen sie stark beim Abreißen, was vom Anwender nicht erwünscht ist.

Der vorliegenden Erfindung liegt die Aufgabe zugrunde, ein auf sich selbst wickelbares, insbesondere handeinreissbares, Klebeband der bekannten Art zu schaffen, mit dem bei wenig aufwändiger Herstellungsweise - ohne die Notwendigkeit, des Vorhandenseins einer Trägergrundierung - einerseits eine optimale Haftung auf dem Untergrund gewährleistet und andererseits ein Umschlagen des Klebstoffes von einer Materialseite des Klebebandes auf die andere verhindert wird, wenn das Band auf sich selbst gewickelt wird.

Diese Aufgabe wird mit einem auf sich selbst wickelbaren Klebeband gelöst, das eine Reißdehnung in Längsrichtung aufweist, die nicht größer ist als 60 %, und das einen bandförmigen Träger umfasst, der eine Materialdicke von 0,1 bis 1,0 mm und ein spezifisches Flächengewicht vom 40 bis 200 g/m² aufweist und der aus einem florfreien, d. h. glatten, Gewirk besteht; welches ein Kettengewirk ist, das eine gerippte Oberfläche sowie eine im Vergleich dazu glatte Oberfläche aufweist, auf der mit einer Grammatur von 20 g/m² bis 150 g/m² eine druckempfindliche Klebebeschichtung aufgetragen ist.

Ein wesentlicher Unterschied zwischen den erfindungsgemäß verwendeten Kettgewirken und dem bekanntermaßen eingesetzten Velours besteht darin, daß der Velours über einen offenen Pol verfügt, das hier beschriebene Gewirke jedoch von seinem Wesen her den Glattwaren zugeordnet wird. Gewirke dieser Art wurden bisher als ungeeignet als Trägermaterialien für Klebebänder betrachtet. Überraschenderweise wurde jedoch gefunden, daß mit einem solchen, in wenig aufwendiger Weise herstellbaren Material, wenn es eine Materialdicke von 0,1 bis 1,0 mm und ein spezifisches Flächengewicht vom 40 - 200 g/m² aufweist, nicht nur eine Handeinreißbarkeit des Klebebandes erzielt, sondern auch die Klebebeschichtung ohne Grundierung auf den Träger aufgebracht werden kann, wobei durch das Gewirk mindestens eine glatte (optisch durch ein Glänzen angezeigte) Trägerseite erhalten wird, die eine optimale Haftung des Klebstoffes auf dem Untergrund gewährleistet.

Der Träger des erfindungsgemäßen Klebebandes kann aus Polyesterfasergam, vorzugsweise aus PET, anderen Synthesefasergamen, wie aus Polyamid oder Polyacrylnitril, oder aus einem Mischfasergarn synthetischer Fasern, vorzugsweise PET/PA, bestehen. In bevorzugten Ausführungen kann das spezifische Flächengewicht des Trägers 70 - 110 g/m² betragen und die Materialdicke des Trägers im Bereich von etwa 0,2 mm bis 0,7 mm liegen.

Als druckempfindliche Klebstoffe können Acrylatklebstoffe, insbesondere UV-ver netzbare Acrylatklebstoffe, Synthese- und auch Naturkautschukklebstoffe eingesetzt werden, wobei sich das verwendete Auftragsverfahren nach der Durchlässigkeit des Trägermaterials richtet.

Als Auftragsverfahren kann zunächst eine Direktbeschichtung des Trägers eingesetzt werden. Bekannte Direktbeschichtungsverfahren sind der Walzen- und der Düsenauftrag, wobei insbesondere die zweite Form als besonders geeignet erscheint. Beim Walzenauftrag wird der fließfähige Klebstoff über ein beheiztes Walzensystem dosiert und in der gewünschten Schichtdicke aufgetragen. Beim einem Düsenauftrag wird der Klebstoff mittels einer Pumpe, insbesondere einer Zahnradpumpe, durch eine Breitschlitzdüse (sogenannte GID-Düse) gedrückt, die dabei auf dem Trägermaterial aufliegen kann. Durch die Düse wird der Klebstoff gleichmäßig flächenförmig verteilt und direkt auf das Trägermaterial aufgebracht. Direktbeschichtungen lassen sich immer dann vorteilhaft durchführen, wenn der Träger ausreichend dicht ist, d.h. wenn ein Wandern der Klebstoffe durch den Träger während der Beschichtung ausgeschlossen werden kann. Außerdem muß der Träger über eine ausreichende thermische Stabilität verfügen.

Der Klebstoff kann auch in einem drucklosen Beschichtungsverfahren, wie dem sogenannten "Curtain-Coating-Verfahren", aufgebracht werden. Gemäß diesem Verfahren fällt ein geschlossener Klebstofffilm auf das Substrat. Dadurch wird eine gleichmäßige Dicke und damit Grammatur der Klebstoffschicht erreicht. Es wird nur soviel Klebstoff aufgetragen, wie unbedingt benötigt wird. Bevorzugt ist eine Grammatur von nicht mehr als 65 g/m².

Schließlich können auch indirekte Beschichtungsverfahren, wie z.B. die Transferbeschichtung mit Hilfe eines Zwischenträgers, zum Einsatz kommen. Dazu wird zuerst ein silikonisierter Interliner (silikonisiertes Papier oder silikonisierte Polymerfolie, wie Polyolefinfolie oder Polyesterfolie), beschichtet. Anschließend wird das Trägermaterial zukaschiert. Soll ein auf sich selbst gewickeltes Klebeband nach diesem Verfahren hergestellt werden, so muß bei der Konfektionierung der Rollen allerdings der Interliner, welcher als Prozeßhilfe dient, wieder von dem Trägermaterial abgezogen und separat aufgewickelt werden.

Transferbeschichtungen und drucklose Beschichtungen werden bevorzugt bei temperaturempfindlichen und/oder für den Klebstoff durchlässigem Trägem eingesetzt. Eine Beschädigung des Trägers und die Verschmutzung der Beschichtungswalzen während des Beschichtungsprozesses wird so vermieden.

Bei dem erfindungsgemäß eingesetzten Gewirk sind grundsätzlich die verschiedensten Legungen denkbar. Wichtig ist jedoch - wie bereits erwähnt - die Ausbildung mindestens einer glatten Trägerseite, um die gewünschte Klebstoffhaftung zu erzielen. Als ein wichtiger Aspekt für die Auswahl der Legung kommt dabei, insbesondere beim Einsatz einer Transferbeschichtung, aber zum Tragen, daß bei auf ihren beiden Seiten unterschiedlich ausgebildeten Trägermaterialien, d.h. bei einem Träger mit einer glatten und einer mehr gerippten Oberfläche, wie sie sich nach einem Wirken mit R/L-Legungen ergeben, auch ein Unterschied in der Haftung des Klebstoffs auf den beiden Materialseiten vorliegt. In der Regel haftet der Klebstoff auf der glatten Seite des Materials deutlich besser, als auf der leicht gerippte Seite. Durch diesen Effekt wird ein Umschlagen des Klebstoffes von einer Materialseite auf die andere verhindert, wenn das Band auf sich selbst gewickelt wird. Beim Einsatz UV-vernetzter Klebstoffe wird dieses Umschlagen des Klebstoffes auf textilen Trägem bei der Transferbeschichtung ansonsten häufig beobachtet. Erfolgt die Klebstoffbeschichtung als Direktbeschichtung, können mit Vorteil auch andere Legungen, z.B. R/R-Legungen, verwendet werden.

Der Träger kann mit Vorteil eine Maschenanzahl von mindestens 80 pro dm, vorzugsweise im Bereich von etwa 195 pro dm bis 250 pro dm und eine Stäbchenanzahl von mindestens 80 pro dm, vorzugsweise im Bereich von etwa 110 pro dm bis 150 pro dm aufweisen.

Als weniger geeignet zur Herstellung eines erfindungsgemäßen Klebebandes erscheinen sehr weiche, elastische Wirkwaren. Die Einsatzmöglichkeiten der verschiedenen Träger werden nämlich nicht nur durch einen bestimmten Legungs- bzw. Bindungstyp, sondern auch in starkem Maß durch ihr Dehnungsverhalten bestimmt. Aus diesem Grunde werden erfindungsgemäß auch Kettgewirke und keine Kuliergewirke oder Gestricke als Trägermaterialien bevorzugt. Die letztgenannten Materialien weisen in der Regel, sofern keine zusätzlichen Schußfäden oder andere stabilisierende Bindungselemente verwendet worden, eine zu hohe Elastizität auf. Die (Reiß-)Dehnung des Trägers bei einem erfindungsgemäßen Klebeband sollte daher möglichst bei weniger als 60 % liegen. Besonders bevorzugt ist ein Bereich von 10 - 25 %.

Erfindungsgemäße Klebebänder können bevorzugt derart hergestellt werden, daß sie in Querrichtung von Hand einreißbar sind. Die Reißfestigkeit in Längsrichtung sollte aber mindestens 15 N/cm betragen und vorzugsweise im Bereich von 15 - 70 N/cm liegen.

Zur abschließenden Konfektionierung bei der Herstellung von Rollen erfindungsgemäßer Klebebänder können verschiedene Verfahren angewendet werden, wobei jeweils eine beschichtete sogenannte Mutterrolle die Ausgangsbasis bildet. Bei dem ersten Verfahren, dem Abstechen von Rollen aus vorgefertigten Kurzrollen (Wickeln), werden aus einer Mutterrolle zunächst Kurzrollen mit vorgegebener Länge gefertigt, die dann anschließend auf die gewünschte Breite abgestochen werden. Bei dem zweiten Verfahren, dem direkten Rollenschneiden, wird das beschichtete Trägermaterial in einem Arbeitsgang abgerollt, in schmale Streifen geschnitten und schließlich zu kurzen Schmalrollen aufgewickelt. Sowohl bei dem ersten als auch bei dem zweiten Verfahren können die späteren Abrollkräfte des erfindungsgemäßen Klebebandes von der Rolle über die Zugspannung eines Wickelautomaten eingestellt werden.

Weitere vorteilhafte Ausführungen der Erfindung sind in den Unteransprüchen und der nachfolgenden speziellen Beschreibung enthalten. Anhand zweier Ausführungsbeispiele wird dabei die Erfindung näher erläutert.

Anhand der Zeichnung soll die Erfindung beispielhaft genauer erläutert werden. Dabei zeigen:
- Fig. 1: einen Querschnitt durch ein erfindungsgemäßes Klebeband,
- Fig. 2: ein Legungsbild für ein erfindungsgemäß als Trägermaterial verwendetes Gewirk.

### Beispiel 1

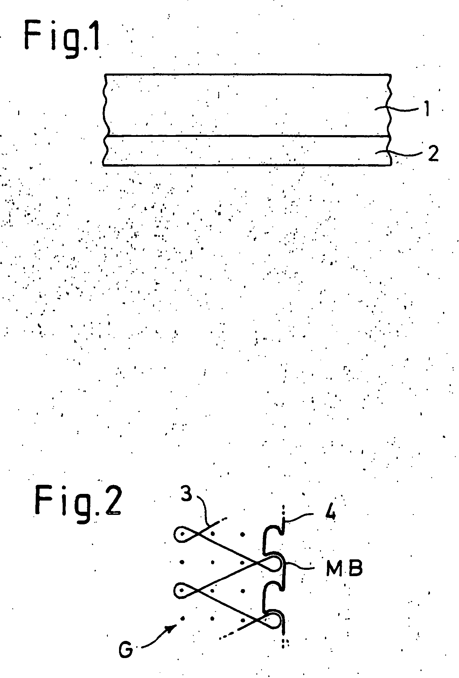

Für ein von Hand einreißbares Kabelwickelband, das entsprechend dem in Fig. 1 dargestellten Aufbau einen bandförmigen, aus einem Gewirk (in Fig. 2 mit dem Bezugszeichen G bezeichnet) bestehenden Träger 1 und eine darauf einseitig unmittelbar aufgetragene druckempfindliche Klebebeschichtung 2 umfaßte, wurde als Material des Trägers 1 ein PET-Kettgewirke mit einem spezifischen Flächengewicht von ca. 90 g/m² und als Klebebeschichtung 2 ein mit einer Grammatur von ca. 70 g/m² aufgetragener UV-vernetzter Acrylatklebstoff eingesetzt.

Bei dem Gewirk G des Trägers 1 handelte es sich insbesondere um ein einreißbares Gewirk G, das entsprechend seiner Bindungsart blockierte Maschen (in Fig. 2 mit dem Bezugszeichen MB bezeichnet) aufwies. Eine solche Art der Legung, könnte auch als eine Kombination der Grundlegungen Franse und Samt bezeichnet werden.

In Fig. 2 ist beispielhaft ein Legungsbild eines Gewirks G mit einer derartigen Kombination dargestellt. Im Detail handelt es sich um eine gegenlegige zweifadensystemige Rechts/Links-Franse-Samt-Legung (RL-FrS-2). Der linke Faden 3 (bzw. die linke Faser) ist dabei dem Grundbindungstyp "Samt" zuzuordnen und weist geschlossene Fußbindungen auf. Der rechte Faden 4 (bzw. die rechte Faser) ist dem Grundtyp "Franse" zuzuordnen. Er weist eine einmaschige und offene Legung auf.

Die Anzahl der Maschen des verwendeten Gewirks G betrug 21 per 1 cm +/- 1 Masche, die Anzahl der Stäbchen 12 per 1 cm +/- 1 Stäbchen. Die Garnfeinheit lag bei 50 dtex. Das erfindungsgemäße Klebeband wies insgesamt die in der nachfolgenden Tabelle 1 aufgeführten Eigenschaften auf.

**Tabelle 1**

| Merkmal | Methode | Einheit | Wert |
|---|---|---|---|
| Material | | - | Kettgewirke |
| Garn | | - | Polyestergarn |
| Flächengewicht | EN 2286-2 | g/m² | 90. |
| Klebstoffauftragsgewicht | EN 2286-2 | g/m² | 70 |
| Materialdicke (D) | EN 1942 | mm | ca. 0,3 |
| Mechanische Eigenschaften | | | |
| Reißdehnung, längs | EN 1941 | % | ca. 25 |
| Reißfestigkeit, längs | EN 1940 | N/cm | ca. 45 |
| Klebkraft, Stahl | EN 1939 | N/cm | > 3 |

### Beispiel 2

Für ein reißfestes textiles Klebeband, das ebenfalls entsprechend dem in Fig. 1 dargestellten Aufbau einen bandförmigen, aus einem Gewirk G bestehenden Träger 1 und eine darauf einseitig unmittelbar aufgetragene druckempfindliche Klebebeschichtung 2 umfaßte, wurde als Material des Trägers 1 ein PET-Kettgewirk mit einem spezifischen Flächengewicht von ca. 110 g/m² und als Klebebeschichtung 2 ein mit einer Grammatur von ca. 80 g/m² aufgetragener UV-vernetzter Acrylatklebstoff eingesetzt.

Das erfindungsgemäße Klebeband wies die in der nachfolgenden Tabelle 2 aufgeführten Eigenschaften auf.

**Tabelle 2**

| Merkmal | Methode | Einheit | Wert |
|---|---|---|---|
| Material | | - | Kettgewirke |
| Garn | | - | Polyestergam |
| Flächengewicht | EN 2286-2 | g/m² | 110 |
| Klebstoffauftragsgewicht | EN 2286-2 | g/m² | 80 |
| Materialdicke (D) | EN 1942 | mm | ca. 0,4 |
| Mechanische Eigenschaften | | | |
| Reißdehnung, längs | EN 1941 | % | ca. 20 |
| Reißfestigkeit, längs | EN 1940 | N/cm | ca. 65 |
| Klebkraft, Stahl | EN 1939 | N/cm | > 3 |

Die Erfindung beschränkt sich nicht auf die beschriebenen Ausführungsbeispiel, sondern umfaßt auch alle im Sinne der Erfindung gleichwirkenden Ausführungen. So kann es sich - wie bereits erwähnt - bei dem Trägermaterial 1 auch um ein Gewirk G mit anderer Legungsart, wie beispielsweise mit einer reinen oder kombinierten (polfreien) Trikotbindung, handeln. Die Feinheit der Fasern 3, 4 des Gewirks G kann bevorzugt im Bereich von etwa 20 dtex bis 70 dtex, insbesondere im Bereich von 25 bis 55 dtex, besonders bevorzugt im Bereich von 30 bis 45 dtex, liegen.

Der Fachmann kann die Erfindung durch zusätzliche vorteilhafte Maßnahmen ergänzen, ohne daß der Rahmen der Erfindung verlassen wird. So kann das erfindungsgemäße Klebeband beispielsweise optional mit einer flammwidrig wirkenden Ausrüstung versehen sein.

### Bezugszeichen

- 1: Träger
- 2: Klebebeschichtung
- 3: Faden von 1 vom Grundbindungstyp "Samt"
- 4: Faden den von 1 vom Grundbindungstyp "Franse"

- G: Gewirk
- MB: blockierte Masche

## Patentansprüche

1. Auf sich selbst wickelbares Klebeband, mit einer Reißdehnung in Längsrichtung, die nicht größter ist als 60 %, umfassend einen bandförmigen Träger (1), der eine Materialdicke (D) von 0,1 bis 1,0 mm und ein spezifisches Flächengewicht vom 40 bis 200 g/m² aufweist und der aus einem florfreien, d. h. glatten, Gewirk (G) besteht, welches ein Kettengewirk ist, das eine gerippte Oberfläche sowie eine im Vergleich dazu glatte Oberfläche aufweist, auf der mit einer Grammatur von 20 g/m² bis 150 g/m² eine druckempfindliche Klebebeschichtung (2) aufgetragen ist.

2. Klebeband nach Anspruch 1,
wobei das spezifische Flächengewicht des Trägers (1) 70-110 g/m² beträgt.

3. Klebeband nach Anspruch 1 oder 2,
wobei das Klebeband in Querrichtung von Hand einreißbar ist.

4. Klebeband nach einem der Ansprüche 1 bis 3,
wobei die Reißfestigkeit in Längsrichtung mindestens 15 N/cm beträgt und vorzugsweise im Bereich von 15 - 70 N/cm liegt.

5. Klebeband nach einem der Ansprüche 1 bis 4,
wobei die Reißdehnung in Längsrichtung im Bereich von 10 - 25 % liegt.

6. Klebeband nach einem der Ansprüche 1 bis 5,
wobei die Klebebeschichtung (2) aus einem natürlichen oder synthetischen, kautschuk- oder acrylathaltigen, vorzugsweise UV-vemetzbaren, Haftklebstoff besteht.

7. Klebeband nach einem der Ansprüche 1 bis 6,
wobei die Klebebeschichtung (2) mit einer Grammatur von nicht mehr als 65 g/m² auf den Träger aufgebracht ist.

8. Klebeband nach einem der Ansprüche 1 bis 7,
wobei die Materialdicke (D) des Trägers (1) im Bereich von etwa 0,2 mm bis 0,7 mm liegt.

9. Klebeband nach einem der Ansprüche 1 bis 8,
wobei der Träger (1) eine Maschenanzahl von mindestens 80 pro dm, vorzugsweise im Bereich von etwa 195 pro dm bis 250 pro dm, aufweist.

10. Klebeband nach einem der Ansprüche 1 bis 9,
wobei der Träger (1) eine Stäbchenanzahl von mindestens 80 pro dm, vorzugsweise im Bereich von etwa 110 pro dm bis 150 pro dm, aufweist.

11. Klebeband nach einem der Ansprüche 1 bis 10,
wobei der Träger (1) aus Polyesterfasergarn, vorzugsweise aus PET, anderen Synthesefasergarnen, wie aus Polyamid oder Polyacrylnitril, oder aus einem Mischfasergam synthetischer Fasern, vorzugsweise PET/PA, besteht.

12. Klebeband nach einem der Ansprüche 1 bis 11,
wobei das Gewirk (G) aus einem Zweifadensystem (3, 4) gebildet ist.

13. Klebeband nach einem der Ansprüche 1 bis 12,
wobei die Legung des Gewirks (G) eine R/L- oder eine R/R-Legung ist, wobei die Oberfläche des Trägers (1) auf der Seite, auf der die Klebebeschichtung (2) aufgetragen ist, im wesentlichen glatt ist.

14. Klebeband nach einem der Ansprüche 1 bis 13,
wobei die Legung des Gewirks (G) blockierte Maschen umfaßt und insbesondere durch eine Kombination aus Fäden (3) mit Samtbindung und Fäden (4) mit Fransenbindung beschreibbar ist.

15. Klebeband nach einem der Ansprüche 1 bis 15,
wobei die Feinheit der Fasern (3, 4) des Gewirks (G) im Bereich von etwa 20 dtex bis 70 dtex, insbesondere im Bereich von 25 bis 55 dtex, besonders bevorzugt im Bereich von 30 bis 45 dtex, liegt.

16. Klebeband nach einem der Ansprüche 1 bis 15,
wobei das Klebeband bei einer Prüfung nach EN 1939 eine Klebkraft auf Stahl von mehr als 3 N/cm aufweist.

## Claims

1. Adhesive tape which can be wound upon itself, having an elongation at break in the longitudinal direction of not more than 60%, comprising a tape-shaped carrier (1) which has a material thickness (D) of 0.1 to 1.0 mm and a specific basis weight of 40 to 200 g/m² and which consists of a pileless, i.e. smooth, knit (G), which is a warp knit, having a ribbed surface and a surface which is smooth in comparison therewith and to which a pressure-sensitive adhesive coating (2) is applied at a grammage of 20 g/m² to 150 g/m².

2. Adhesive tape according to Claim 1,
the specific basis weight of the carrier (1) being 70-110 g/m².

3. Adhesive tape according to Claim 1 or 2,
the adhesive tape being hand-tearable in the transverse direction.

4. Adhesive tape according to one of Claims 1 to 3,
the breaking strength in the longitudinal direction being at least 15 N/cm and preferably in the range of 15-70 N/cm.

5. Adhesive tape according to one of Claims 1 to 4,
the elongation at break in the longitudinal direction being in the range of 10-25%.

6. Adhesive tape according to one of Claims 1 to 5,
the adhesive coating (2) comprising a natural or synthetic pressure-sensitive adhesive which contains rubber or acrylate and is preferably UV-crosslinkable.

7. Adhesive tape according to one of Claims 1 to 6,
the adhesive coating (2) being applied to the carrier at a grammage of not more than 65 g/m².

8. Adhesive tape according to one of Claims 1 to 7,
the material thickness (D) of the carrier (1) being in the range from about 0.2 mm to 0.7 mm.

9. Adhesive tape according to one of Claims 1 to 8,
the carrier (1) having a number of stitches of at least 80 per dm, preferably in the range from about 195 per dm to 250 per dm.

10. Adhesive tape according to one of Claims 1 to 9,
the carrier (1) having a number of wales of at least 80 per dm, preferably in the range from about 110 per dm to 150 per dm.

11. Adhesive tape according to one of Claims 1 to 10, the carrier (1) comprising polyester fibre yarn, preferably PET, other synthetic fibre yarns, such as polyamide or polyacrylonitrile, or a blended fibre yarn of synthetic fibres, preferably PET/PA.

12. Adhesive tape according to one of Claims 1 to 11, the knit (G) being formed from a two-thread system (3, 4).

13. Adhesive tape according to one of Claims 1 to 12, the lapping of the knit (G) being a plain lapping or a rib lapping, the surface of the carrier (1) being substantially smooth on that side to which the adhesive coating (2) is applied.

14. Adhesive tape according to one of Claims 1 to 13, the lapping of the knit (G) including non-running stitches and being in particular describable by a combination of threads (3) in a velvet construction and threads (4) in a pillar stitch construction.

15. Adhesive tape according to one of Claims 1 to 15, the linear density of the fibres (3, 4) of the knit (G) being in the range from about 20 dtex to 70 dtex, in particular in the range from 25 to 55 dtex, particularly preferably in the range from 30 to 45 dtex.

16. Adhesive tape according to one of Claims 1 to 15, the adhesive tape having an EN 1939 bond strength on steel of more than 3 N/cm.

## Revendications

1. Ruban adhésif enroulable sur lui-même, avec une élongation à la rupture dans le sens longitudinal ne dépassant pas 60 %, comprenant un support en forme de bande (1) qui présente une épaisseur de matériau (D) allant de 0,1 à 1,0 mm et un grammage spécifique allant de 40 à 200 g/m², et qui se compose d'un maillage (G) sans voile, c'est à dire lisse, lequel est un tissu tricoté en chaîne présentant une surface côtelée ainsi qu'une surface comparativement lisse, sur laquelle est appliqué un revêtement adhésif (2) sensible à la pression avec un grammage allant de 20 g/m² à 150 g/m².

2. Ruban adhésif selon la revendication 1,
le grammage spécifique du support (1) allant de 70 à 110 g/m².

3. Ruban adhésif selon la revendication 1 ou 2,
le ruban adhésif pouvant être déchiré à la main dans le sens transversal.

4. Ruban adhésif selon l'une quelconque des revendications 1 à 3,
la résistance à la déchirure étant au moins de 15 N/cm dans le sens longitudinal et de préférence de l'ordre de 15 à 70 N/cm.

5. Ruban adhésif selon l'une quelconque des revendications 1 à 4, l'élongation à la rupture étant de l'ordre de 10 à 25 % dans le sens longitudinal.

6. Ruban adhésif selon l'une quelconque des revendications 1 à 5,
le revêtement adhésif (2) se composant d'une colle auto-adhésive naturelle ou synthétique contenant du caoutchouc ou de l'acrylate, de préférence réticulable aux UV.

7. Ruban adhésif selon l'une quelconque des revendications 1 à 6,
le revêtement adhésif (2) étant appliqué sur le support avec un grammage n'excédant pas 65 g/m².

8. Ruban adhésif selon l'une quelconque des revendications 1 à 7,
l'épaisseur de matériau (D) du support (1) étant de l'ordre d'environ 0,2 mm à 0,7 mm.

9. Ruban adhésif selon l'une quelconque des revendications 1 à 8,
le support (1) présentant un nombre de mailles d'au moins 80 par dm, de préférence de l'ordre d'environ 195 par dm à 250 par dm.

10. Ruban adhésif selon l'une quelconque des revendications 1 à 9,
le support (1) présentant un nombre de demi brides d'au moins 80 par dm, de préférence de l'ordre d'environ 110 par dm à 150 par dm.

11. Ruban adhésif selon l'une quelconque des revendications 1 à 10,
le support (1) se composant de fil de fibres polyester, de préférence en PET, d'autres fils de fibres synthétiques telles qu'en polyamide ou en nitrile polyacrylique, ou d'un fil de fibres mélangées de fibres synthétiques, de préférence en PET/PA.

12. Ruban adhésif selon l'une quelconque des revendications 1 à 11,
le maillage (G) étant constitué d'un système à deux fils (3, 4).

13. Ruban adhésif selon l'une quelconque des revendications 1 à 12,
la volée du maillage (G) étant une volée D/G ou D/D, sachant que la surface du support (1) est essentiellement lisse du côté sur lequel est appliqué le revêtement adhésif (2).

14. Ruban adhésif selon l'une quelconque des revendications 1 à 13,
la volée du maillage (G) comprenant des mailles bloquées et pouvant être notamment décrite par une combinaison de fils (3) avec armure de velours et de fils (4) avec armure de franges.

15. Ruban adhésif selon l'une quelconque des revendications 1 à 15,
la masse linéique des fibres (3, 4) du maillage (G) étant de l'ordre d'environ 20 dtex à 70 dtex, en particulier de l'ordre de 25 à 55 dtex, plus préférablement de l'ordre de 30 à 45 dtex.

16. Ruban adhésif selon l'une quelconque des revendications 1 à 15,
le ruban adhésif présentant lors d'un essai selon la norme EN 1939 un pouvoir adhésif sur l'acier de plus de 3 N/cm.
